(19) Europäisches Patentamt
European Patent Office
Office européen des brevets

(11) **EP 2 684 099 B1**

(12) **FASCICULE DE BREVET EUROPEEN**

(45) Date de publication et mention de la délivrance du brevet:
**14.09.2016 Bulletin 2016/37**

(21) Numéro de dépôt: **12711934.5**

(22) Date de dépôt: **24.02.2012**

(51) Int Cl.:
*F15B 9/09* *(2006.01)* *G01M 15/14* *(2006.01)*
*G05B 23/02* *(2006.01)* *F16K 37/00* *(2006.01)*

(86) Numéro de dépôt international:
**PCT/FR2012/050388**

(87) Numéro de publication internationale:
**WO 2012/120218 (13.09.2012 Gazette 2012/37)**

(54) **PROCÉDÉ ET DISPOSITIF DE SURVEILLANCE POUR SYSTÈME D'ACTIONNEMENT À SERVOVALVE**

VERFAHREN UND VORRICHTUNG ZUR ÜBERWACHUNG EINES SERVOVENTILBETÄTIGUNGSSYSTEMS

METHOD AND DEVICE FOR MONITORING A SERVO-VALVE ACTUATION SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **07.03.2011 FR 1151853**

(43) Date de publication de la demande:
**15.01.2014 Bulletin 2014/03**

(73) Titulaire: **SNECMA**
**75015 Paris (FR)**

(72) Inventeurs:
• **GUEIT, Nicolas, Marie, Pierre**
**F-75006 Paris (FR)**
• **GODEL, Franck**
**F-77590 Chartrettes (FR)**
• **PONTALLIER, Benoît**
**F-75017 Paris (FR)**

(74) Mandataire: **David, Alain et al**
**Cabinet Beau de Loménie**
**158, rue de l'Université**
**75340 Paris Cedex 07 (FR)**

(56) Documents cités:
WO-A1-96/18110          US-A1- 2005 000 580
US-A1- 2007 203 656          US-A1- 2009 306 830

**Description**

Arrière-plan de l'invention

La présente invention se rapporte au domaine général des systèmes d'actionnement à servovalve. L'invention concerne notamment un système d'actionnement pour turboréacteur d'aéronef.

Un turboréacteur comprend typiquement des systèmes d'actionnement à servovalve, destiné à piloter des géométries variables du turboréacteur.

Par "géométries variables" du turboréacteur, on entend ici des organes du moteur ou de son environnement dont les dimensions, formes, positions et/ou vitesses sont susceptibles d'être modifiées, en fonction d'événements détectés ou de paramètres de fonctionnement du moteur. Des exemples de "géométries variables" sont des aubes stators à calage variable de redresseurs de compresseur, des vannes de décharge du compresseur, des sommets d'aubes de turbine et un doseur de carburant.

Typiquement, ces systèmes d'actionnement sont contrôlés par le module de régulation électronique du système de régulation moteur ou EEC (pour « *Electronic Engine Control* »), de sorte à adapter les géométries variables au scénario du vol. Le contrôle est assuré par l'intermédiaire de boucles d'asservissement.

Ainsi, on comprend bien que la surveillance des systèmes d'actionnement de géométries variables dans un turboréacteur est cruciale en termes de disponibilité et de rendement du turboréacteur.

Les dégradations de ces systèmes d'actionnement se traduisent notamment par des positions et/ou des dimensions des organes du turboréacteur non conformes aux commandes de l'ECU en régime établi, ou par une réponse lente de ces organes à ces commandes en régime transitoire. Ces dégradations sont des prémices de panne car elles sont en général, dans un premier temps, soit compensées par les boucles d'asservissement des systèmes d'actionnement soit sans conséquence notable autre qu'une reconfiguration (par exemple, un changement de voie de commande active).

Toutefois au bout d'un certain temps, lorsque ces dégradations persistent et s'aggravent, elles ne peuvent plus être compensées car les équipements de commande sont limités. Ainsi, ces dégradations peuvent avoir pour conséquence de rendre le turboréacteur inopérable ou non performant. Cela peut se traduire par un message de panne émis par l'ECU. La détection de ces détériorations est donc trop tardive puisqu'elle n'est réalisée que lorsque le système d'actionnement est en panne.

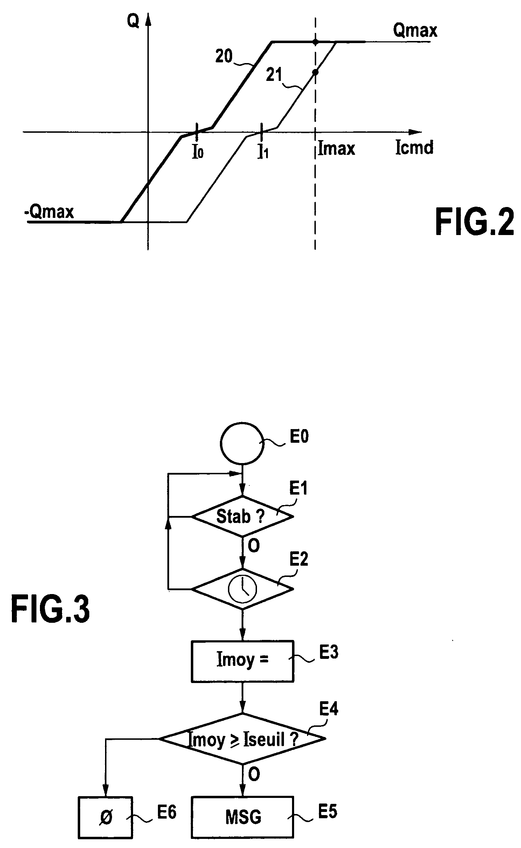

Un type de dégradation particulier est la dérive du courant de repos de la servovalve, comme le montre la figure 2.

La figure 2 est un graphe qui représente une courbe de fonctionnement d'une servovalve. Plus précisément, le graphe de la figure 2 illustre l'évolution du débit hydraulique Q délivrée par la servovalve 3 à un vérin, en fonction du courant de commande $I_{cmd}$. Sur la figure 2, $I_{max}$ représente la valeur maximale du courant de commande $I_{cmd}$ que l'ECU est capable de fournir.

La courbe 20 correspond à un état nominal de la servovalve et montre que le courant de repos de la servovalve, c'est-à-dire le courant de commande nécessaire à maintenir le vérin dans une position déterminée, présente une valeur $I_0$ non nulle. Dans l'état nominal, le courant $I_{max}$ permet toutefois de fournir le débit hydraulique maximal $Q_{max}$.

La courbe 21 représente un état non-nominal de la servovalve, par exemple un état après vieillissement. On constate que le courant de repos présente une valeur $I_1$ supérieure à $I_0$. Autrement dit, il y a eu dérive du courant de repos de la servovalve. De plus, dans l'état non-nominal de la courbe 21, le courant $I_{max}$ ne permet plus de fournir le débit hydraulique maximal $Q_{max}$. Autrement dit, la courbe 21 correspond à un état dégradé de la servovalve.

Il est connu de détecter un tel état dégradé. Toutefois, lors de la détection, les performances du turboréacteur sont déjà affectées sensiblement.

Il existe donc un besoin de disposer d'un procédé de surveillance efficace d'un système d'actionnement de géométries variables d'un turboréacteur, afin notamment de pouvoir délivrer un avis de maintenance de ce système d'actionnement avant que le turboréacteur ne soit rendu inopérable ou non performant.

Un besoin similaire existe dans d'autres applications d'un système d'actionnement à servovalve.

Le document US2009/0306830 décrit un procédé de surveillance d'un système à valve dans lequel on mesure une durée de commutation d'un élément de valve entre deux positions. Si cette durée dépasse un seuil prédéterminé, le procédé détermine si ce dépassement est dû à l'usure du système ou à des conditions générales. Les conditions générales sont par exemple représentées par le courant de commande d'une valve à solénoïde. Le courant de commande est comparé avec une valeur de référence. Cependant, ce document ne décrit pas que le courant de commande pris en compte est une valeur moyenne du courant de commande pendant la détection d'un état stabilisé, l'état stabilisé étant détecté en vérifiant que la position mesurée d'un vérin reste constante. Au contraire, le procédé de surveillance décrit nécessite une commutation de l'élément de valve entre deux positions.

Objet et résumé de l'invention

La présente invention répond au besoin précité en proposant un procédé de surveillance d'un système d'actionnement comprenant un dispositif de commande, une servovalve et un vérin commandé par la servovalve, le dispositif de commande étant apte à déterminer un courant de commande en fonction d'une consigne de position et d'une position mesurée du vérin et à fournir le courant de commande à la servovalve. Ce procédé de surveillance est remarquable en ce qu'il comprend :

- une étape de détection d'un état stabilisé en vérifiant que ladite position mesurée reste constante,
- une étape de détermination d'une valeur moyenne du courant de commande pendant la détection de l'état stabilisé, et
- une étape de comparaison de la valeur moyenne avec un seuil prédéterminé.

Corrélativement, l'invention vise également un dispositif de commande pour un système d'actionnement comprenant le dispositif de commande, une servovalve et un vérin commandé par la servovalve, le dispositif de commande étant apte à déterminer un courant de commande en fonction d'une consigne de position et d'une position mesurée du vérin et à fournir le courant de commande à la servovalve. Ce dispositif de surveillance est remarquable en ce qu'il comprend :

- des moyens de détection d'un état stabilisé aptes à détecter un état stabilisé en vérifiant que ladite position mesurée reste constante,
- des moyens de détermination d'une valeur moyenne du courant de commande pendant la détection de l'état stabilisé, et
- des moyens de comparaison de la valeur moyenne avec un seuil prédéterminé.

A l'état stabilisé, la position du vérin correspond à la consigne de position. Le courant de commande de la servovalve correspond donc au courant de repos de la servovalve. Le calcul d'une valeur moyenne de ce courant permet de s'affranchir des variations rapides et la comparaison avec un seuil permet de tester si la dérive du courant de repos est acceptable ou non.

Le procédé de surveillance peut comprendre, avant l'étape de détermination, une étape d'attente d'une durée d'attente pendant laquelle l'état stabilisé est détecté.

Cela permet d'attendre l'atténuation d'éventuels effets transitoires après la détection de l'état stabilisé.

Dans un mode de réalisation, l'état stabilisé est détecté en fonction de la position du vérin.

Dans un mode de réalisation, le système d'actionnement est un système d'actionnement de géométries variables d'un turboréacteur de moteur d'aéronef, l'état stabilisé étant détecté lorsque l'aéronef est au sol

La valeur moyenne peut être déterminée en fonction du courant de commande déterminé par le dispositif de commande.

La valeur moyenne est donc précise car elle n'est pas influencée par la précision de mesure du courant de commande.

Dans ce cas, le dispositif de commande peut comprendre un régulateur proportionnel-intégral, la valeur moyenne étant déterminée en fonction du courant intégral du régulateur.

Selon un mode de réalisation, le procédé de surveillance comprend, lorsque la valeur moyenne est supérieure ou égale au seuil prédéterminé, une étape de génération d'un message de maintenance.

Dans un mode particulier de réalisation, les différentes étapes du procédé de surveillance sont déterminées par des instructions de programmes d'ordinateurs.

En conséquence, l'invention vise aussi un programme d'ordinateur sur un support d'informations, ce programme étant susceptible d'être mis en oeuvre dans un dispositif de surveillance ou plus généralement dans un ordinateur, ce programme comportant des instructions adaptées à la mise en oeuvre des étapes d'un procédé de surveillance tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :

- la figure 1 représente un système d'actionnement d'un turboréacteur,
- la figure 2 est un graphe qui représente une courbe de fonctionnement d'une servovalve,
- la figure 3 représente, sous forme d'organigramme, les principales étapes d'un procédé de surveillance conforme à l'invention.

Description détaillée d'un mode de réalisation

Comme décrit précédemment, l'invention concerne la surveillance de chaînes d'asservissement de systèmes d'actionnement à servovalve. Dans le mode de réalisation décrit ici, on envisage la surveillance d'une chaîne d'asservissement d'un système d'actionnement pilotant une géométrie variable d'un turboréacteur équipant un aéronef. Toutefois, cette hypothèse n'est en aucun cas limitative. L'invention s'applique également à d'autres systèmes d'actionnement à servovalve, notamment à des engins de chantier, à des robots industriels,...

L'actionnement de la géométrie variable correspond par exemple au pilotage de :

- la position d'un doseur de carburant d'un turboréacteur, aussi connu sous le nom de FMV (« *Fuel Metering Valve»*) ;
- des positions de vannes de décharge d'un compresseur du turboréacteur, comme les systèmes d'actionnement de VBV (Variable Bleed Valve) et de TBV (Transient Bleed Valve) ;
- des angles de calage d'aubes de stator d'un turboréacteur, aussi connu sous le nom de VSV (Variable Stator Vane) ; et
- des jeux aux sommets d'aube d'une turbine haute-pression ou basse-pression, comme les systèmes d'actionnement de HPTACC (High Pressure Turbine Active Clearance Control) ou LPTACC (Low Pressure Turbine Active Clearance Control).

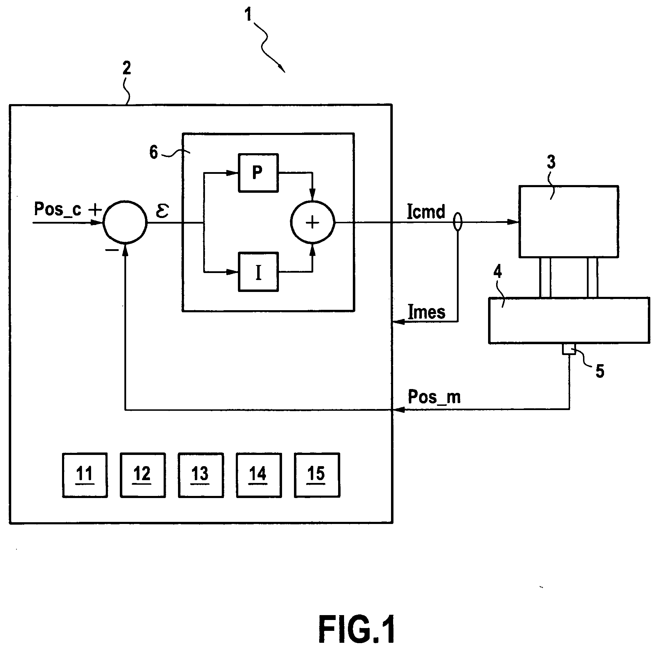

La **figure 1** représente un système d'actionnement 1 pilotant la position d'un doseur de carburant d'un turboréacteur. Le système d'actionnement comprend un dispositif de commande 2, une servovalve 3 et un vérin 4. La position du vérin 4 influence le débit de carburant délivré par le doseur de carburant (non représenté).

Le dispositif de commande 2 peut être le calculateur du turboréacteur (ECU pour « *Engine Control Unit* »), également appelé dispositif de régulation pleine autorité de l'aéronef (FADEC pour « *Full Authority Digital Engine Control »*).

Le vérin 4 est associé à un capteur de position 5. La position du vérin 4 est commandée par la servovalve 3, elle-même commandée par le dispositif de commande 2. Plus précisément, la servovalve 3 adapte la puissance hydraulique délivrée au vérin 4 en fonction d'un courant électrique de commande $I_{cmd}$ qu'elle reçoit du dispositif de commande 2.

La position du vérin 4 mesurée par le capteur 5 est notée Pos_m et est fournie au dispositif de commande 2.

Le dispositif de commande 2, la servovalve 3 et le vérin 4 forment une boucle d'asservissement. En effet, le dispositif de commande 2 détermine la différence ε entre la position Pos_m et une consigne de position, notée Pos_c. La différence ε est fournie à un régulateur 6, par exemple de type proportionnel-intégral, qui détermine le courant de commande $I_{cmd}$.

Le dispositif de commande 2 a ici l'architecture matérielle d'un ordinateur. Il comporte notamment un processeur 11, une mémoire non-volatile 12, une mémoire volatile 13, une interface 14 et un module de communication 15. Le processeur 11 permet d'exécuter des programmes d'ordinateur mémorisés dans la mémoire non-volatile 12, en utilisant la mémoire volatile 13. L'interface 14 permet d'une part d'acquérir des signaux de mesure, notamment la position Pos_m et une mesure du courant de commande $I_{cmd}$, notée $I_{mes}$, et d'autre part d'émettre des signaux de commande, notamment le courant de commande $I_{cmd}$.

Le module de communication 15 permet d'échanger des données avec d'autres entités, notamment un équipement de maintenance.

Dans un mode de réalisation, la détermination de la consigne de position Pos_c et de la différence ε ainsi que la mise en oeuvre du régulateur 6 correspondent à un programme de commande mémorisé dans la mémoire non-volatile 12 et exécuté par le processeur 11.

Comme expliqué en introduction en référence à la figure 2, le courant de repos de la servovalve 3 est susceptible de dériver. On comprend qu'entre les valeurs $I_0$ et $I_1$ du courant de repos, correspondant respectivement à un état nominal et un état dégradé, se trouve un seuil de courant $I_{seuil}$ jusqu'auquel la dérive du courant de repos reste acceptable.

On décrit maintenant, en référence à la **figure 3,** un procédé de surveillance conforme à l'invention, destiné à déterminer si la dérive du courant de repos de la servovalve 3 est acceptable ou non. Le procédé de surveillance est mis en oeuvre par le dispositif de commande 2, qui constitue donc également au dispositif de surveillance conforme à l'invention.

Le procédé de surveillance de la figure 3 débute à l'étape E0 puis, à l'étape E1, on vérifie si un état stabilisé est détecté.

Un état stabilisé peut être détecté par exemple lorsque la position mesurée Pos_m reste constante.

D'autres conditions peuvent être utilisées en complément ou en variante pour détecter un état stabilisé, notamment :

- L'aéronef est au sol (ce qui est typiquement indiqué par la valeur d'une variable du calculateur appelée WOW pour « *Weight On Wheel »).*
- Le régime moteur N est constant, par exemple égal à un régime de ralenti au sol.

Lorsqu'un état stabilisé n'est pas détecté, le procédé de surveillance boucle à l'étape E1. Par contre, si un état stabilisé est détecté, le procédé de surveillance se poursuit à l'étape E2.

A l'étape E2, on attend une durée d'attente prédéterminée pendant laquelle l'état stabilisé est détecté.

L'étape E2 est par exemple une boucle de comptage d'un nombre de cycle d'horloge temps réel. Si à chaque cycle compté l'état stabilisé est détecté, on passe à l'étape E3 lorsque le compteur de cycle atteint une valeur prédéterminée. Par contre, si l'état stabilisé n'est plus détecté avant que le compteur de cycle ait atteint la valeur prédéterminée, le procédé de surveillance retourne à l'étape E1.

L'étape E2 permet d'attendre l'atténuation d'éventuels effets transitoires dus au fonctionnement du turboréacteur avant la détection de l'état stabilisé à l'étape E1.

Ensuite, à l'étape E3, on détermine la valeur moyenne $I_{moy}$ du courant de commande $I_{cmd}$ pendant une durée prédéterminée pendant laquelle l'état stabilisé est détecté.

La valeur moyenne $I_{moy}$ représente le courant de repos de la servovalve 3. En effet, lorsque l'état stabilisé est détecté, la position mesurée Pos_m est constante et égale à la consigne Pos_c. Le courant de commande $I_{cmd}$ sert donc simplement à maintenir la position constante.

L'étape E3 est par exemple mise en oeuvre par une boucle de comptage d'un nombre de cycles d'horloge temps réel. A chaque cycle i, on calcule la somme S(i) = S(i-1) + $I_{cmd}$. Après un nombre prédéterminé n de cycles, on divise la somme S(n) par n pour obtenir $I_{moy}$ :

$$I_{moy} = S(n) / n$$

A chaque cycle, si l'état stabilisé n'est plus détecté, le procédé de surveillance est réinitialisé (étape E0). Par contre, si l'état stabilisé est toujours détecté jusqu'au nième cycle et au calcul de $I_{moy}$, on passe alors à l'étape E4.

A l'étape E4, le courant $I_{moy}$ est comparé au seuil de courant $I_{seuil}$.

Si $I_{moy}$ est inférieur à $I_{seuil}$, cela signifie que la dérive du courant de repos de la servovalve 3 est acceptable. Le procédé de surveillance se termine donc à l'étape E6 sans envoi de message de maintenance.

Par contre, si $I_{moy}$ est supérieur ou égal à $I_{seuil}$, cela signifie que la dérive du courant de repos de la servovalve 3 n'est plus acceptable. Le procédé de surveillance se termine donc à l'étape E5 au cours de laquelle un message de maintenance est généré.

Le message de maintenance est par exemple mémorisé dans la mémoire non-volatile 12, puis communiqué à un équipement de maintenance ultérieurement, par le module de communication 15.

La durée d'attente de l'étape E2, la durée prise en compte pour calculer la moyenne $I_{moy}$ et la valeur du seuil $I_{seuil}$ peuvent être choisie par le concepteur du procédé de surveillance, en fonction de l'application visée.

Par exemple, durée d'attente de l'étape E2 et la durée prise en compte pour calculer la moyenne $I_{moy}$ à l'étape E3 peuvent être chacune de 10 secondes.

Dans ce cas, la durée totale des étapes E2 et E3 pendant laquelle il est nécessaire de détecter un état stabilisé est de 20 secondes. Une telle durée est inférieure à la durée pendant laquelle un avion est au ralenti au sol avant le décollage pendant une mission typique. Il est donc possible de détecter un état stabilisé et d'effectuer les étapes E2 et E3 à cet instant.

Par ailleurs, on sait qu'une boucle moteur présente typiquement une fréquence propre correspondant à une période de l'ordre de 4 secondes. Pour une horloge temps réel de période typique de 15ms, le calcul de $I_{moy}$ sur une période de 10 secondes correspond à n = 666 cycles et permet donc d'obtenir une moyenne réaliste indépendante des oscillations de la boucle moteur. De plus, la durée d'attente de 10 secondes est supérieure à la période de la boucle moteur et permet donc d'attendre l'atténuation des effets transitoires.

La valeur de $I_{seuil}$ peut être choisit en fonction de la courbe caractéristique nominale de la servovalve 3, du courant maximal que le dispositif de commande 2 est capable de fournir, et de la précision du courant fourni par le dispositif de commande 2.

A l'étape E3, la moyenne $I_{moy}$ est calculée en fonction du courant de commande $I_{cmd}$. Plus précisément, la moyenne $I_{moy}$ est calculée en fonction de la valeur du courant de commande $I_{cmd}$ calculée par le régulateur 6. Dans le cas d'un régulateur proportionnel-intégral, cette valeur est égal au courant intégral du régulateur lorsque l'état stabilisé est détecté. Ainsi, la moyenne $I_{moy}$ peut être calculée en fonction de la valeur du courant intégral du régulateur. En variante, la moyenne $I_{moy}$ peut calculée en fonction de la valeur mesurée $I_{mes}$ du courant de commande $I_{cmd}$. Dans ce cas cependant, la moyenne $I_{moy}$ est influencée par la précision de la mesure.

Dans un mode de réalisation, les étapes de la figure 3 correspondent à un programme de surveillance mémorisé dans la mémoire non-volatile 12 et exécuté par le processeur 11.

Selon un autre avantage de l'invention, l'identification du courant de repos de la servovalve peut permettre de ne plus saturer la partie intégrale du régulateur 6 de type proportionnel-intégral et ainsi de limiter l'erreur de trainage (lors des transitoires) sur la position du vérin piloté par la servovalve. Dans le cas du pilotage des angles de calage d'aubes de stator d'un turboréacteur (VSV), cette précision accrue permet d'obtenir plus de marge et donc plus de robustesse.

## Revendications

1. Procédé de surveillance d'un système d'actionnement (1) comprenant un dispositif de commande (2), une servovalve (3) et un vérin (4) commandé par la servovalve (3), le dispositif de commande étant apte à déterminer un courant de commande ($I_{cmd}$) en fonction d'une consigne de position (Pos_c) et d'une position mesurée (Pos_m) du vérin (4) et à fournir ledit courant de commande ($I_{cmd}$) à la servovalve (3), le procédé de surveillance étant **caractérisé en ce qu'**il comprend :

    - une étape (E1) de détection d'un état stabilisé en vérifiant que ladite position mesurée (Pos_m) reste constante,
    - une étape (E3) de détermination d'une valeur moyenne ($I_{moy}$) du courant de commande pendant la détection de l'état stabilisé, et
    - une étape (E4) de comparaison de ladite valeur moyenne avec un seuil prédéterminé.

**2.** Procédé de surveillance selon la revendication 1, comprenant, avant l'étape (E3) de détermination, une étape (E2) d'attente d'une durée d'attente pendant laquelle l'état stabilisé est détecté.

**3.** Procédé de surveillance selon l'une des revendications 1 à 2, dans lequel le système d'actionnement (1) est un système d'actionnement de géométries variables d'un turboréacteur de moteur d'aéronef, l'état stabilisé étant détecté lorsque l'aéronef est au sol.

**4.** Procédé de surveillance selon l'une des revendications 1 à 3, dans lequel ladite valeur moyenne ($I_{moy}$) est déterminée en fonction du courant de commande déterminée par le dispositif de commande.

**5.** Procédé de surveillance selon la revendication 4, dans lequel le dispositif de commande (2) comprend un régulateur (6) proportionnel-intégral, ladite valeur moyenne ($I_{moy}$) étant déterminée en fonction du courant intégral du régulateur (6).

**6.** Procédé de surveillance selon l'une des revendications 1 à 5, comprenant, lorsque ladite valeur moyenne est supérieure ou égale audit seuil prédéterminé, une étape (E5) de génération d'un message de maintenance.

**7.** Programme d'ordinateur comportant des instructions pour l'exécution des étapes d'un procédé de surveillance selon l'une quelconques des revendications 1 à 6 lorsque ledit programme est exécuté par un ordinateur.

**8.** Support d'enregistrement lisible par un ordinateur sur lequel est enregistré un programme d'ordinateur comprenant des instructions pour l'exécution des étapes d'un procédé de surveillance selon l'une quelconque des revendications 1 à 6.

**9.** Dispositif de commande (2) pour un système d'actionnement (1) comprenant le dispositif de commande (2), une servovalve (3) et un vérin (4) commandé par la servovalve (3), le dispositif de commande étant apte à déterminer un courant de commande ($I_{cmd}$) en fonction d'une consigne de position (Pos_c) et d'une position mesurée (Pos_m) du vérin (4) et à fournir ledit courant de commande ($I_{cmd}$) à la servovalve (3), le dispositif de commande étant **caractérisé en ce qu'**il comprend :

    - des moyens de détection d'un état stabilisé aptes à détecter un état stabilisé en vérifiant que ladite position mesurée (Pos_m) reste constante,
    - des moyens de détermination d'une valeur moyenne ($I_{moy}$) du courant de commande pendant la détection de l'état stabilisé, et
    - des moyens de comparaison de ladite valeur moyenne avec un seuil prédéterminé.

**Patentansprüche**

**1.** Verfahren zur Überwachung eines Betätigungssystems (1), das eine Steuervorrichtung (2), ein Servoventil (3) und einen Zylinder (4), welcher durch das Servoventil (3) betätigt wird, umfasst, wobei die Steuervorrichtung geeignet ist, einen Steuerstrom ($I_{cmd}$) in Abhängigkeit eines Positionssollwertes (Pos_c) und einer gemessenen Position (Pos_m) des Zylinders (4) zu bestimmen und den Steuerstrom ($I_{cmd}$) an das Servoventil (3) zu liefern, wobei das Überwachungsverfahren **dadurch gekennzeichnet ist, dass** es umfasst:

    - einen Schritt (E1) zur Erfassung eines stabilisierten Zustands, indem überprüft wird, ob die gemessene Position (Pos_m) konstant bleibt,
    - einen Schritt (E3) zur Bestimmung eines Mittelwertes ($I_{moy}$) des Steuerstroms während der Erfassung des stabilisierten Zustands und
    - einen Schritt (E4) zum Vergleichen des Mittelwertes mit einem vorbestimmten Schwellwert.

**2.** Überwachungsverfahren nach Anspruch 1, das vor dem Bestimmungsschritt (E3) einen Schritt (E2) zum Abwarten einer Wartezeit, während der der stabilisierte Zustand erfasst wird, umfasst.

**3.** Überwachungsverfahren nach einem der Ansprüche 1 bis 2, bei dem das Betätigungssystem (1) ein System zur Betätigung von veränderlichen Geometrien einer Strahlturbine eines Luftfahrzeugtriebwerks ist, wobei der stabilisierte Zustand erfasst wird, wenn das Luftfahrzeug am Boden ist.

**4.** Überwachungsverfahren nach einem der Ansprüche 1 bis 3, bei dem der Mittelwert ($I_{moy}$) in Abhängigkeit von dem durch die Steuervorrichtung bestimmten Steuerstrom bestimmt wird.

**5.** Überwachungsverfahren nach Anspruch 4, bei dem die Steuervorrichtung (2) einen Proportional-Integral-Regler (6) umfasst, wobei der Mittelwert ($I_{moy}$) in Abhängigkeit von dem Integralstrom des Reglers (6) bestimmt wird.

**6.** Überwachungsverfahren nach einem der Ansprüche 1 bis 5, das dann, wenn der Mittelwert größer als der oder gleich dem vorbestimmte(n) Schwellwert ist, einen Schritt (E5) zum Generieren einer Wartungsmeldung umfasst.

**7.** Computerprogramm, umfassend Befehle für die Durchführung der Schritte eines Überwachungsverfahrens nach einem der Ansprüche 1 bis 6, wenn das Programm durch einen Computer ausgeführt wird.

**8.** Durch einen Computer lesbarer Speicherträger, auf dem ein Computerprogramm, das Befehle für die Durchführung der Schritte eines Überwachungsverfahrens nach einem der Ansprüche 1 bis 6 umfasst, gespeichert ist.

**9.** Steuervorrichtung (2) für ein Betätigungssystem (1), das die Steuervorrichtung (2), ein Servoventil (3) und einen Zylinder (4), welcher durch das Servoventil (3) betätigt wird, umfasst, wobei die Steuervorrichtung geeignet ist, einen Steuerstrom ($I_{cmd}$) in Abhängigkeit eines Positionssollwertes (Pos_c) und einer gemessenen Position (Pos_m) des Zylinders (4) zu bestimmen und den Steuerstrom ($I_{cmd}$) an das Servoventil (3) zu liefern, wobei die Steuervorrichtung **dadurch gekennzeichnet ist, dass** sie umfasst:

- Mittel zur Erfassung eines stabilisierten Zustands, die geeignet sind, einen stabilisierten Zustand dadurch zu erfassen, dass überprüft wird, ob die gemessene Position (Pos_m) konstant bleibt,
- Mittel zur Bestimmung eines Mittelwertes ($I_{moy}$) des Steuerstroms während der Erfassung des stabilisierten Zustands und
- Mittel zum Vergleichen des Mittelwertes mit einem vorbestimmten Schwellwert.

**Claims**

**1.** A method for monitoring an actuation system (1) comprising a control device (2), a servovalve (3) and an actuator (4) controlled by the servovalve (3), the control device being able to determine a control current ($I_{cmd}$) according to a set position value (Pos_c) and to a measured position (Pos_m) of the actuator (4) and to provide said control current ($I_{cmd}$) to the servovalve (3), the monitoring method being **characterized in that** it comprises:

- a step (E1) for detecting a stabilized condition by making sure that said measured position (Pos_m) remains constant,
- a step (E3) for determining an average value ($I_{moy}$) of the control current during the detection of the stabilized position, and
- a step (E4) for comparing said average value with a predetermined threshold.

**2.** The monitoring method according to claim 1, comprising before the determination step (E3), a step (E2) for waiting for a waiting period during which the stabilized condition is detected.

**3.** The monitoring method according to one of claims 1 to 2, wherein the actuation system (1) is a system for actuating variable geometries of an aircraft turbojet engine, the stabilized condition being detected when the aircraft is on the ground.

**4.** The monitoring method according to one of claims 1 to 3, wherein said average value ($I_{moy}$) is determined according to the control current determined by the control device.

**5.** The monitoring method according to claim 4, wherein the control device (2) comprises a proportional-integral controller (6), said average value ($I_{moy}$) being determined according to the integral current of the controller (6).

**6.** The monitoring method according to one of claims 1 to 5, comprising, when said average value is greater than or equal to said predetermined threshold, a step (E5) for generating a maintenance message.

**7.** A computer program including instructions for executing the steps of a monitoring method according to any of claims 1 to 6, when said program is executed by a computer.

**8.** A computer-legible recording medium on which is recorded a computer program comprising instructions for executing the steps of a monitoring method according to any of claims 1 to 6.

**9.** A control device (2) for an actuation system (1) comprising the control device (2), a servovalve (3) and an actuator (4) controlled by the servovalve (3), the control device being able to determine a control current ($I_{cmd}$) according to a set position value (Pos_c) and to a measured position (Pos_m) of the actuator (4) and to provide said control current ($I_{cmd}$) to the servovalve (3), the control device being **characterized in that** it comprises:

- means for detecting a stabilized condition able to detect a stabilized condition by verifying that said measured position (Pos_m) remains constant,
- means for determining an average value ($I_{moy}$) of the control current during the detection of the stabilized condition, and
- means for comparing said average value with a predetermined threshold.

1

2

6

P

Pos_c + $\varepsilon$

+

Icmd

3

Imes

4

I

5

Pos_m

11 12 13 14 15

# FIG.1

**FIG.2**

**FIG.3**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20090306830 A